# EUROPÄISCHE PATENTANMELDUNG

(11) **EP 1 627 793 A2**
(43) Veröffentlichungstag der Anmeldung: **22.02.2006**
(21) Anmeldenummer: 05017689.0
(22) Anmeldetag: 13.08.2005
(51) Int. Cl.: B62B 1/26

(54) **Golfwagen**

(30) Priorität: 21.08.2004 DE 102004040638
(71) Anmelder: Bayerische Motoren Werke Aktiengesellschaft, 80809 München (DE)
(72) Erfinder: Leibold, Paul, 82541 Münsing-Ambach (DE); Graf von Saurma, Nikolaus, 80799 München (DE)

(57) **Zusammenfassung**

Ein Golfwagen (1), der sich aus drei Rahmenteilen (2, 3, 4) zusammensetzt, weist ein unteres Rahmenteil (4) auf, das von einem Strangprofil mit einer glattflächigen, konvex gewölbten Oberseite (30) gebildet wird. An der Unterseite des Strangprofils sind mehrere schienenartige Führungen (40, 41, 42) zur Aufnahme des mittleren Rahmenteils (3) und weiterer Bauteile (7) vorgesehen.

## Beschreibung

Die Erfindung betrifft einen Golfwagen nach dem Oberbegriff des Anspruchs 1.

Aus der DE 93 08 808 U1 ist ein derartiger Golfwagen bekannt, dessen unteres Rahmenteil aus einem Vierkantrohr besteht, an dem ein Lagerbock zur Anlenkung , der Räder sowie Halterungen für eine Golftasche angeordnet sind.

Aufgabe der Erfindung ist es, das untere Rahmenteil für einen Golfwagen weiter zu bilden.

Diese Aufgabe wird durch einen Golfwagen mit den Merkmalen des Anspruchs 1 gelöst.

Kerngedanke der Erfindung ist es hierbei, für das untere Rahmenteil ein Strangprofil zu verwenden, das an seiner Oberseite konvex gewölbt ist. Durch den seitlichen Beschnitt wird eine individuelle Form erreicht, die sich deutlich von dem einfachen Vierkantrohr des bekannten Golfwagens unterscheidet. Durch die sich nach unten in Richtung des freien Endabschnittes verjüngende Form wird ein ansprechendes äußeres Erscheinungsbild erzielt. Zudem kann an dem vergleichsweise breit gestalteten oberen Endabschnitt des unteren Rahmenteils eine breitbasige Anbindung für die Räder des Golfwagens vorgesehen werden. Damit zeichnet sich das untere Rahmenteil im Vergleich zum Stand der Technik durch eine größere Funktionalität aus.

Hierzu ist nach einer vorteilhaften Ausgestaltung der Erfindung an der Unterseite des Strangprofils eine schienenartige Aufnahme für einen Lagerbock vorgesehen, zur Aufnahme von Anbauteilen. Insbesondere können an dem Lagerbock Lenker zur Aufnahme der Räder des Golfwagens vorgesehen sein.

Durch entsprechende Gestaltung des Strangprofils können in besonders günstiger Weise zudem weitere Anbauteile, wie beispielsweise eine Halterung für eine Golftasche oder ein Fußteil, am Strangprofil angeordnet werden.

Ein mögliches Ausführungsbeispiel der Erfindung ist in der Zeichnung dargestellt und wird nachfolgend näher erläutert. Es zeigt:
- Figur 1: einen erfindungsgemäßen Golfwagen in perspektivischer Ansicht,
- Figur 2: eine perspektivische Darstellung des unteren Rahmenteils,
- Figur 3: einen Längsschnitt durch die Rahmenteile und die Radführung des Golfwagens von Figur 1,
- Figur 4: eine Schnittdarstellung entsprechend der Schnittverlaufslinie IV-IV aus Figur 3 und
- Figur 5: eine Schnittdarstellung entsprechend der Schnittverlaufslinie V-V aus Figur 3.

Ein in seiner Gesamtheit mit 1 bezeichneter Golfwagen setzt sich aus einem oberen, einem mittleren und einem unteren Rahmenteil 2 bzw. 3 bzw. 4 zusammen.

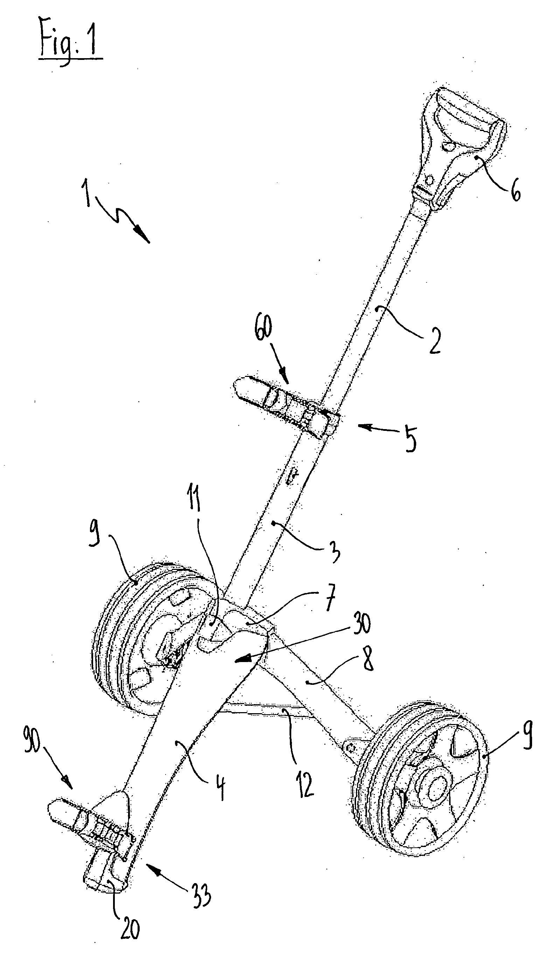

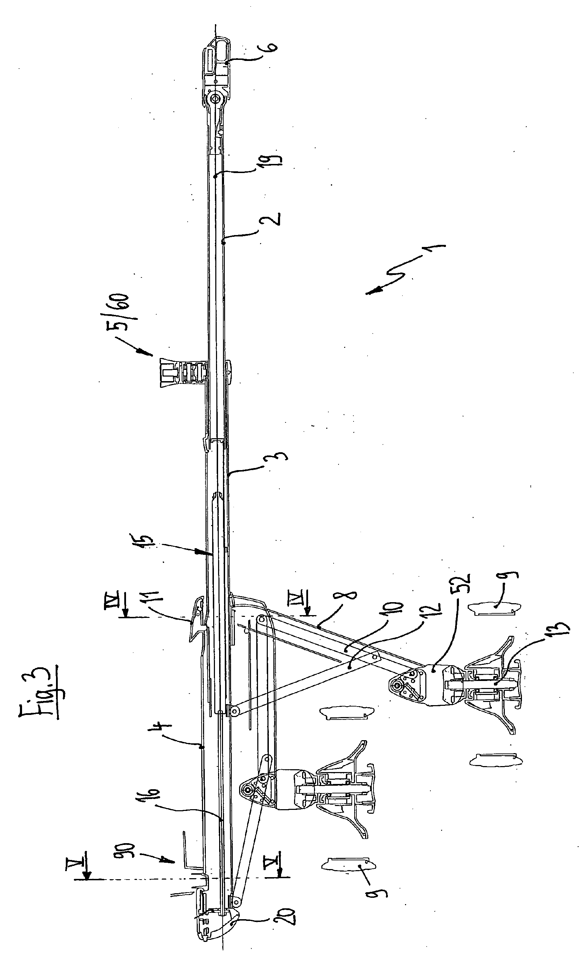

Hierbei zeigt Figur 1 den Golfwagen 1 in seiner Gebrauchslage, in perspektivischer Ansicht. Figur 3 ist ein Längsschnitt durch den Golfwagen 1, mit einem Schnittverlauf entlang der Längsachse 19 des Golfwagens 1 sowie entlang der Anbindung der Räder 9, die sowohl in der ausgeklappten als auch der eingeklappten Position dargestellt sind. Die eingeklappte Position der Räder 9 wird durch Ineinanderschieben von mittlerem und unterem Rahmenteil 3 bzw. 4 erreicht. Werden auch oberes und mittleres Rahmenteil 2 bzw. 3 ineinander geschoben, kann der Golfwagen 1 mit kompakten Abmessungen zum Beispiel im Kofferraum eines Personenkraftwagens verstaut werden.

Zur Anbringung einer nicht dargestellten Golftasche am Golfwagen 1 ist eine obere und eine untere Halterung 60 bzw. 90 vorgesehen.

Die Rahmenteile 2 bis 4 werden von Strangprofilen gebildet, wobei das obere und das untere Rahmenteil 2 bzw. 3 geschlossene Querschnitte aufweisen, die in Form und Dimension so bemessen sind, dass das obere Rahmenteil 2 in das mittlere Rahmenteil 3 einschiebbar ist. Die Arretierung der Rahmenteile 2 und 3 zueinander erfolgt durch eine stufenlos wirkende Klemmeinrichtung 5. Der freie Endabschnitt des oberen Rahmenteils 2 trägt einen Griff 6.

Mittleres und unteres Rahmenteil 3 bzw. 4 sind ebenfalls ineinander gesteckt, somit also teleskopartig ineinander zu schieben bzw. auseinander zu ziehen. Die Arretierung zwischen mittlerem und unterem Rahmenteil 3 bzw. 4 erfolgt in einer auseinander gezogenen Gebrauchslage bzw. in einer ineinander geschobenen Nichtgebrauchslage (nicht dargestellt) und kann durch Betätigung eines Hebels 11 aufgehoben werden.

Im oberen Endbereich des unteren Rahmenteils 4 ist unter einer Abdeckung 21 ein Lagerbock 7 vorgesehen, der als Lagerung für zwei Querlenker 8 und zwei Parallellenker 10 dient, an deren Endabschnitten Radträger 52 mit Steckachsen 13 (siehe Figur 3) für Räder 9 vorgesehen sind. Die parallel angeordneten Querlenker 8 und Parallellenker 10 (siehe Figur 3) bewirken in Verbindung mit Dreieckslenkern 12, dass die Räder 9 beim Zusammenschieben des Golfwagens 1 parallel verschwenkt werden, somit dieselbe Ausrichtung aufweisen wie in ihrer Gebrauchslage.

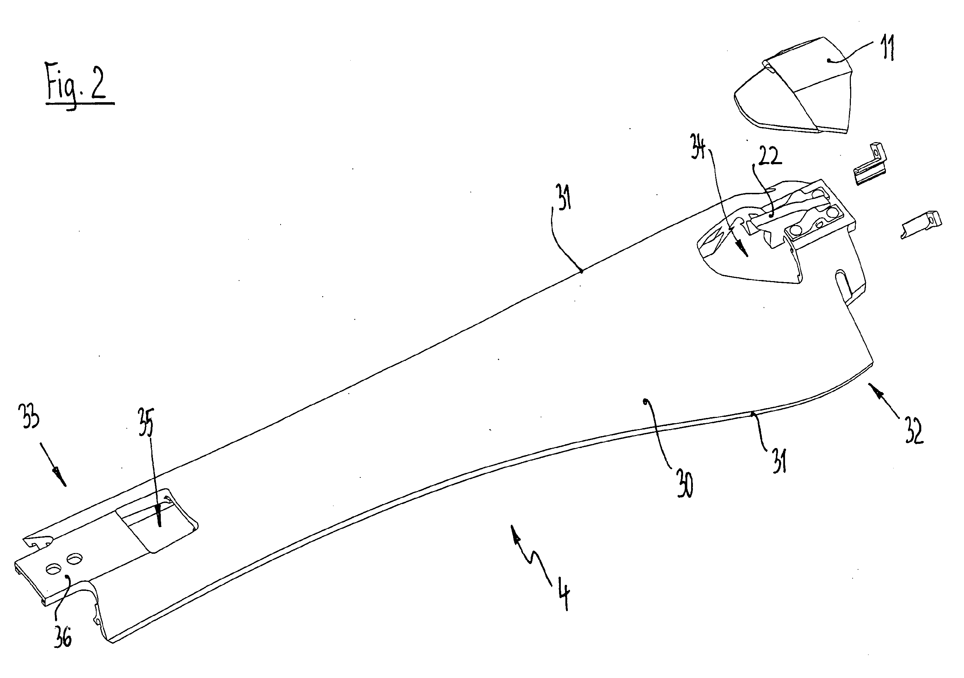

Während die Rahmenteile 2 und 3 von Strangprofilen mit geschlossenem Querschnitt gebildet werden, besteht das untere Rahmenteil 4 aus einem nach unten offenen, schalenförmigen Strangprofil, mit einer glattflächigen, konvex gewölbten Oberseite 30 - siehe vergrößerte Darstellung gemäß Figur 2. Das Strangprofil des unteren Rahmenteils 4 ist an seinen seitlichen Rändern 31 beschnitten. Durch den Beschnitt des Strangprofils ergibt sich in seinem oberen Endabschnitt 32 eine vergleichsweise große Breite, während sich das Strangprofil in Richtung seines unteren Endabschnittes 33 verjüngt. Durch die Erfindung wird eine individuelle Formgebung des unteren Rahmenteils 4 erreicht, die das gesamte Erscheinungsbild des Golfwagens 1 prägt und dem Golfwagen 1 eine hochwertige Anmutung verleiht. Die Tatsache, dass für die Bildung des unteren Rahmenteils 4 ein Strangprofil verwendet wird, erschließt sich dem Nutzer des Golfwagens 1 aufgrund der individuellen Formgebung des Strangprofils nicht auf den ersten Blick.

Im Bereich des oberen Endabschnittes 32 des unteren Rahmenteils 4 ist eine Öffnung 34 vorgesehen, zur Aufnahme des Hebels 11, der mit einem darunter liegenden Hebel 22 zusammenwirkt, über den unteres und mittleres Rahmenteil 4 bzw. 3 in ihren beiden Endlagen zueinander fixiert werden können.

Auf den freien Endabschnitt des Strangprofils des unteren Rahmenteils 4 ist ein Fußteil 20 aufgesteckt. Zusätzlich zum Fußteil 20 kann auch ein kleines Laufrad als Ergänzung zu den beiden Rädern 9 vorgesehen sein.

Am unteren Endabschnitt 33 ist eine Öffnung 35 im Strangprofil vorgesehen, in die die abnehmbare Halterung 90 formschlüssig eingesteckt werden kann. Außerdem ist eine Anlagefläche 36 für das Fußteil 20 vorgesehen.

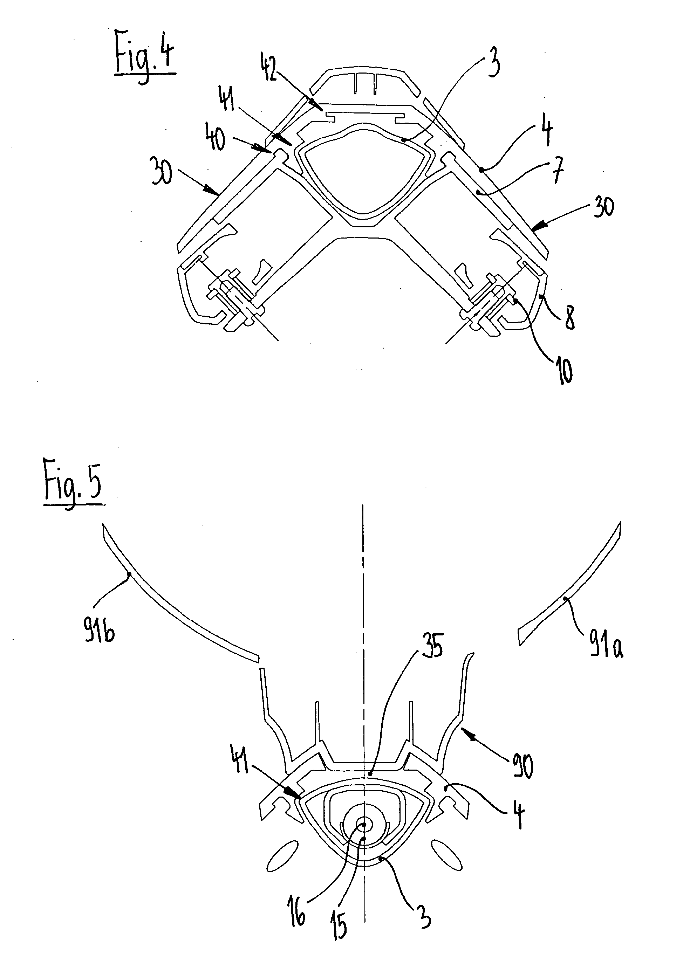

Wie aus den Schnittdarstellungen der Figuren 4 und 5 hervorgeht, ist die Unterseite des Strangprofils des unteren Rahmenteils 4 im Unterschied zur glattflächigen Oberseite 30 mit schienenartigen Führungen 40, 41 und 42 versehen. Die Führungen 40 dienen der Aufnahme des Lagerbockes 7, an dem die Querlenker 8 sowie die innenliegenden Parallellenker 10 angelenkt sind. Die schienenartigen Führungen 41 des unteren Rahmenteils 4 bilden eine Schiebeführung für das im Querschnitt etwa dreieckförmige mittlere Rahmenteil 3. Zur Herabsetzung der Reibung sind zwischen der Führung 41 des unteren Rahmenteils 4 und dem mittleren Rahmenteil 3 nicht dargestellte Gleitelemente aus einem Kunststoffmaterial vorgesehen. In die Führung 42 ist in nicht näher dargestellter Weise die Abdeckung 21 eingesteckt.

Figur 5 zeigt einen Schnitt durch das Strangprofil des unteren Rahmenteils 4 im Bereich seines unteren Endabschnittes 33. In die Öffnung 35 ist hierbei die untere Halterung 90 für eine Golftasche, mit kreisbogenförmigen Anlageabschnitten 91 a und 91 b, eingesetzt. Wiederum gut zu erkennen ist die schienenartige Führung 41 zur Führung des mittleren Rahmenteils 3. Außerdem ist im Querschnitt eine Kolbenstange 16 einer Gasfeder 15 (siehe auch Figur 3) dargestellt, die die Ausschubbewegung bei der Überführung des Golfwagens 1 von der Nichtgebrauchslage in die Gebrauchslage unterstützt.

Der gesamte Offenbarungsgehalt der von der Anmelderin mit gleichem Anmeldetag eingereichten drei weiteren Anmeldungen mit dem Titel "Golfwagen" wird hiermit ausdrücklich und vollständig in die vorliegende Anmeldung einbezogen.

### Bezugszeichenliste

- 1: Golfwagen
- 2: oberes Rahmenteil
- 3: mittleres Rahmenteil
- 4: unteres Rahmenteil
- 5: Klemmeinrichtung
- 6: Griff
- 7: Lagerbock
- 8: Querlenker
- 9: Rad
- 10: Parallellenker
- 11: Hebel
- 12: Dreieckslenker
- 13: Steckachse
- 15: Gasfeder
- 16: Kolbenstange
- 19: Längsachse
- 20: Fußteil
- 21: Abdeckung
- 22: Hebel
- 30: Oberseite
- 31: seitlicher Rand
- 32: oberer Endabschnitt
- 33: unterer Endabschnitt
- 34: Öffnung
- 35: Öffnung
- 36: Anlagefläche
- 40: Führung
- 41: Führung
- 42: Führung
- 52: Radträger
- 60: obere Halterung
- 90: untere Halterung
- 91a: Anlageabschnitt
- 91b: Anlageabschnitt

## Patentansprüche

1. Golfwagen, mit einem unteren Rahmenteil, das im wesentlichen von einem Strangprofil gebildet wird,
**dadurch gekennzeichnet, dass** das Strangprofil eine konvex gewölbte Oberseite (30) aufweist und an den seitlichen Rändern (31) so beschnitten ist, dass sich die Breite des unteren Rahmenteils (4) vom oberen Endabschnitt (32) zu seinem unteren Endabschnitt (33) verringert.

2. Golfwagen nach Anspruch 1,
**dadurch gekennzeichnet, dass** die Oberseite (30) des Strangprofils des unteren Rahmenteils (4) glattflächig ist und an der Unterseite des Strangprofils wenigstens eine schienenartige Führung (40, 41, 42) zur Verbindung mit einem mittleren Rahmenteil (3) und/oder zur Anordnung weiterer Bauteile (7) vorgesehen ist.

3. Golfwagen nach Anspruch 2,
**dadurch gekennzeichnet, dass** die schienenartige Führung (40) der Befestigung eines Lagerbockes (7) dient, an dem Querlenker (8) und/oder Parallellenker (10) angelenkt sind, die Räder (9) tragen.

4. Golfwagen nach einem der vorgenannten Ansprüche,
**dadurch gekennzeichnet, dass** das Strangprofil des unteren Rahmenteils (4) eine Öffnung (34) für einen Hebel (11) aufweist, wobei der Hebel (11) zum Festlegen des Golfwagens (1) in seiner auseinander gezogenen Gebrauchslage bzw. in seiner zusammengeschobenen Nichtgebrauchslage dient.

5. Golfwagen nach einem der vorgenannten Ansprüche,
**dadurch gekennzeichnet, dass** das Strangprofil des unteren Rahmenteils (4) eine Öffnung (35) für eine einsteckbare, bevorzugt abnehmbare Halterung (90) für eine Golftasche aufweist.

6. Golfwagen nach einem der vorgenannten Ansprüche,
**dadurch gekennzeichnet, dass** in den unteren Endabschnitt (33) des Strangprofils des unteren Rahmenteils (4) ein Fußteil (20) eingesetzt ist, wobei das Fußteil (20) zur Abstützung des Golfwagens (1), zusätzlich zu den Rädern (9), dient.
